# FASCICULE DE BREVET EUROPEEN

(11) **EP 1 425 124 B1**
(45) Date de publication et mention de la délivrance du brevet: **10.12.2008**
(21) Numéro de dépôt: 02798652.0
(22) Date de dépôt: 21.08.2002
(51) Int. Cl.: B23B 1/00

(54) **VITRAGE DE SECURITE FONCTIONNALISE**
FUNKTIONALISIERTE VERBUNDGLASSCHEIBE
FUNCTIONALISED SAFETY GLAZING

(30) Priorité: 14.09.2001 FR 0111902
(43) Date de publication de la demande: 09.06.2004
(73) Titulaire: SAINT-GOBAIN GLASS FRANCE, 92400 Courbevoie (FR)
(72) Inventeur: BETEILLE, Fabien, F-31250 Revel (FR); BOUCHERET, Jean-Marc, F-69300 Caluire et cuire (FR)
(74) Mandataire: Colombier, Christian
(86) Numéro de dépôt international: PCT/FR2002/002913
(87) Numéro de publication internationale: WO 2003/024649

(56) Documents cités:
- EP-A- 0 893 938
- EP-A- 1 059 161
- DE-U- 8 910 916
- DE-U- 9 317 460
- US-A- 4 228 425

## Description

La présente invention concerne des vitrages présentant une double caractéristique :
► d'une part, il s'agit de vitrages dits de sécurité, en ce sens qu'ils sont aptes à retenir des éclats (notamment des éclats de verre) en cas de bris. Il s'agit notamment des vitrages conformes à la norme européenne ECE R43 ou américaine ANSI Z26.1. Ces vitrages passent de préférence avec succès les deux tests décrits dans ces normes sous les termes "ball drop" et "phantom drop". La configuration la plus usuelle de ce type de vitrage est celle des vitrages feuilletés standards, constitués de deux substrats rigides essentiellement transparents (généralement des verres) entre lesquels est disposée au moins une feuille de polymère thermoplastique, qui va assurer la rétention des éclats de verre en cas de besoin. Le feuilletage, de façon connue, demande généralement un chauffage généralement sous pression des trois éléments assemblés, afin de ramollir et de rendre adhérente la feuille en thermoplastique et éventuellement de supprimer l'air résiduel entre les différents éléments du vitrage.

Il peut aussi s'agir de vitrages feuilletés où la feuille intercalaire est à base d'un polymère adhésif simple- ou double-face du type élastomère, ce qui évite l'opération de feuilletage à chaud mentionnée plus haut.

L'invention inclut aussi les vitrages feuilletés dits « asymétriques » utilisant un seul substrat rigide de type verre associé à plusieurs feuilles de polymère, dont généralement au moins une à base de polyuréthane (comme décrit par exemple dans les brevets EP 132 198, EP 131 523 et EP 389 354).

Elle inclut aussi les vitrages de sécurité où la fonction de rétention des éclats est obtenue par un film plastique, notamment la superposition d'une feuille thermoplastique de type polyvinylbutyral et d'une feuille en polymère protectrice, du type polyéthylènetéréphtalate PET, que l'on vient faire adhérer à un substrat rigide de type verre. Ce type de film plastique est par exemple commercialisé par la société Dupont de Nemours sous le nom «Spalled Shield» ou sous d'autres noms commerciaux par la société « 3M » ou par la société « Southwall » Cette feuille polymère peut être éventuellement transparente aux ondes électromagnétiques. Il en est de même pour le produit commercialisé par la société 3M qui est un assemblage d'un complexe d'au moins deux feuilles de thermoplastiques f'1 et f"1, les natures et les épaisseurs de chacune de ces feuilles pouvant être différentes en fonction des applications recherchées.
► d'autre part, les vitrages selon l'invention sont "fonctionnalisés", en ce sens qu'ils présentent au moins une fonctionnalité conférée par une ou plusieurs couches minces et/ou un ou plusieurs éléments discontinus pouvant être de nature organique, minérale ou hybride organo-minérale (ces couches ou éléments se trouvant généralement disposé(e)s contre un des substrats rigides des vitrages selon l'invention). Ils seront désignés par la suite sous le terme de « système(s) actif(s) ». Les vitrages selon l'invention peuvent en comporter un ou plusieurs.

Les premiers types de système actif intéressant l'invention sont les systèmes électrochimiques en général, et plus particulièrement des systèmes électrocommandables du type vitrage à propriétés énergétiques et/ou optiques variables.

Les systèmes électrocommandables permettent, notamment, d'obtenir des vitrages dont on peut modifier à volonté l'obscurcissement/le degré de vision ou de filtration des rayonnements thermiques/solaires. Il s'agit par exemple des vitrages viologènes, qui permettent de régler la transmission ou l'absorption lumineuse, comme ceux décrits dans le brevet US-5 239 406.

Les systèmes électroluminescents convertissent directement l'énergie électrique en lumière, un exemple étant décrit dans le brevet FR- 2 770 222.

Il y a aussi les vitrages électrochromes, qui permettent de moduler la transmission lumineuse et thermique. Ils sont décrits, notamment, dans les brevets EP-253 713, EP-670 346, l'électrolyte étant sous forme d'un polymère ou d'un gel et les autres couches étant de type minéral. Un autre type est décrit dans les brevets EP-867 752, EP-831 360, PCT/FR00/00675, et WO 00/03289, l'électrolyte étant cette fois sous la forme d'une couche essentiellement minérale, l'ensemble des couches du système étant alors essentiellement minérale : on désigne communément ce type de système électrochrome sous le terme d'électrochrome " tout-solide ". Il existe aussi des systèmes électrochromes où l'ensemble des couches est de type polymère, on parle alors d'électrochrome " tout-polymère ".

De façon générale, les systèmes électrochromes comportent deux couches de matériau électrochrome séparées par une couche d'électrolyte et encadrées par deux couches électroconductrices.

Il existe aussi les systèmes appelés " valves optiques " : il s'agit de films à base de polymère dans lesquels sont disposées des microgouttelettes contenant des particules aptes à se placer selon une direction privilégiée sous l'action d'un champ électrique. Un exemple en est décrit dans le brevet WO 93/09460.

Il existe aussi les systèmes à cristaux liquides, d'un mode de fonctionnement similaire aux précédents : ils utilisent un film de polymère placé entre deux couches conductrices et dans lequel sont dispersées des gouttelettes de cristaux liquides, notamment nématiques à anisotropie diélectrique positive. Quand le film est sous tension, les cristaux liquides sont orientés selon un axe privilégié, ce qui autorise la vision. Hors tension, le film devient diffusant. Des exemples en sont décrits dans les brevets EP-88 126, EP-268 877, EP-238 164, EP-357 234, EP-409 442 et EP-964 288. On peut aussi citer les polymères à cristaux liquides cholestériques, comme ceux décrits dans le brevet WO 92/19695 et les systèmes à cristaux liquides qui commutent avec variation de transmission lumineuse TL.

Un second type de système actif auquel s'intéresse l'invention concerne les couches ou empilements de couches dont les propriétés se modifient sans alimentation électrique, sous l'effet de la chaleur ou de la lumière : on peut citer les couches thermochromes, notamment à base d'oxyde de vanadium (un exemple en est donné dans le brevet français déposé le 23 mai 2000 et de numéro de dépôt FR 00/06585), les couches thermotropes et les couches photochromes.

Il peut s'agir également de systèmes photovoltaïques qui convertissent l'énergie lumineuse en énergie électrique.

Dans le cadre de la présente invention et dans tout le présent texte, il faut comprendre le terme « couche » dans son sens le plus large : il peut s'agir aussi bien de matériaux minéraux que de matériaux de type organique, des polymères tout particulièrement, pouvant se présenter sous forme de films de polymère ou même de films de gel. C'est notamment le cas des gels thermotropes, par exemple ceux décrits dans les brevets EP-639 450, US 5 615 040, WO 94/20294 et EP-878 296.

Un troisième type de système actif auquel s'intéresse l'invention concerne les couches ou empilements de couches à propriétés de contrôle solaire, bas-émissives, notamment à base d'une ou plusieurs couches d'argent intercalées par des couches en diélectrique. Ces empilements peuvent être déposés sur un des substrats rigides ou être déposés sur un substrat souple du type PET(polyéthylène téréphtalate) que l'on dispose entre deux feuilles en polymère thermoplastique du type PVB(polyvinylbutyral) venant assembler les deux substrats rigides du type verre. On en trouve des exemples dans les brevets EP-638 528, EP-718 250, EP-724 955 , EP-758 583 et EP- 847 965.

Enfin, on peut aussi mentionner des revêtements à fonction acoustique (affaiblissement acoustique), à fonction optique (décorative, absorbante, etc.).

Concevoir des vitrages ayant la double caractéristique décrite plus haut n'est pas simple, car l'association d'un système actif et de feuilles de polymère à fonction de rétention d'éclats dans un vitrage crée des contraintes supplémentaires. Ainsi, si l'on interpose un système actif, un système électrochrome par exemple, dans un vitrage feuilleté classique entre le verre et le film intercalaire polymère, on tend à diminuer l'adhérence du film polymère au verre. Il y a donc un risque accru qu'en cas de bris du vitrage, les éclats de verre ne puissent plus être retenus en grande majorité par le film polymère, comme l'imposent les normes.

Si, pour parer à cela, on dispose le système actif sur une des faces extérieure d'un vitrage feuilleté standard, il faut alors prévoir des moyens pour le protéger du contact avec l'atmosphère ambiante, pour le protéger des détériorations chimiques ou mécaniques. Cela impose alors l'utilisation d'un substrat protecteur supplémentaire. Or, un certain nombre d'applications requièrent une épaisseur nominale pour le vitrage, et il n'est pas toujours possible de proposer des vitrages (trop) épais. Cela est notamment le cas des toits automobiles, où les carrossiers installent généralement des verres feuilletés ou trempés, dont l'épaisseur globale ne peut dépasser environ 5 mm. C'est également le cas des vitrages de toiture par exemple, où le bâti ne permet le montage que de vitrages d'épaisseur prédéfinie et souvent imposée par les performances d'isolation thermique à atteindre.

On connaît par DE-U-89 10 916.3 un vitrage spécifique pour custode, ce vitrage consiste en un assemblage, grâce à une feuille intercalaire en matière plastique, de deux substrats en verre trempé

L'invention a alors pour but de proposer un nouveau type de vitrage qui puisse concilier un respect des normes de sécurité avec la présence au sein du vitrage d'au moins un des systèmes actifs décrits plus haut. Elle a plus particulièrement pour but la conception d'un tel vitrage qui puisse en outre ne pas être pénalisé significativement en termes d'encombrement par rapport à un vitrage de sécurité standard comparable. Ce dernier point est clairement un atout quand on vise le marché du remplacement.

L'invention a tout d'abord pour objet un vitrage pour l'industrie automobile ou pour le bâtiment, comportant successivement :
- un premier substrat rigide S1,
- un second substrat rigide S2,
- un troisième substrat rigide, semi-rigide ou flexible S3,
- le troisième substrat S3 étant en retrait par rapport aux deux autres substrats S1 et S2,
- au moins un film polymère a fonction de rétention des éclats en cas de bris du vitrage étant disposé entre le substrat S1 et le substrat S2 et/ou entre le substrat S2 et le substrat S3 et/ou faisant partie du substrat S3, qui se caractérise en ce qu'au moins un système actif A comprenant au moins une couche est disposé entre les substrats S1 et S2 ou entre les substrats S2 et S3, et en ce que la surface active du système actif A est de dimensions similaires ou inférieures à celles du troisième substrat S3.

L'invention a donc mis au point un type de vitrage permettant de concilier sécurité, fonctionnalité et dimensionnement.

Le vitrage comporte le film polymère à fonction de rétention des éclats indispensable pour obtenir le niveau de sécurité voulu en cas de bris du vitrage. Son positionnement dans le vitrage peut être ensuite sélectionné en fonction de celui du système actif qui fonctionnalise le vitrage: si le système actif est entre le substrat S1 et le substrat S2, le film polymère en question sera de préférence entre le substrat S2 et le substrat S3, ou fera partie du substrat S3. Si le système actif est au contraire entre le substrat S2 et le substrat S3, le film polymère en question sera de préférence entre le substrat S1 et S2. Avantageusement, on peut aussi éviter le contact direct entre le système actif et le film polymère destiné à retenir l'essentiel des éclats. On s'assure ainsi que la présence du système actif dans le vitrage n'interfère pas avec la capacité d'adhérence du film polymère à son ou ses substrats porteurs rigides du type verre.

Cela n'exclut pas, bien sûr, la présence d'un second film polymère à fonction de rétention des éclats et en contact avec le système actif : cet autre film peut contribuer à la sécurité du vitrage, mais ce rôle est principalement dédié à celui qui n'est pas en contact avec lui. En séparant ainsi physiquement le film à rétention d'éclats et le système actif, on les fait coexister dans le vitrage sans que l'un n'entame la fonctionnalité de l'autre. Cependant, la contrepartie de cette solution est que le vitrage contient trois substrats plutôt que deux. Tout particulièrement dans le cas où il s'agit de trois substrats en verre, rigides, il est clair que cela conduit à un vitrage globalement plus épais qu'un vitrage feuilleté standard à deux verres. C'est la raison pour laquelle l'invention propose que le substrat S3 soit en retrait par rapport aux deux autres : en étant de dimensions plus réduites, il laisse ainsi une zone périphérique du pourtour du substrat S2 libre. Si ce vitrage doit être inséré dans un bâti, dans une carrosserie (des configurations seront détaillées par la suite), tout va se passer comme si le vitrage n'avait que deux substrats rigides S1 et S2 : on va pouvoir monter le vitrage en le tenant, en ne le fixant que sur ces deux substrats, à leur périphérie. Le troisième substrat, en retrait, sera maintenu aux précédents par des techniques habituelles détaillées plus loin (feuilletage, utilisation d'un adhésif), et le mode de fixation du vitrage n'aura pas besoin de l'enserrer également sur sa périphérie. Ce point est tout particulièrement avantageux quand le vitrage est destiné à être un toit automobile, où généralement il est prévu un montage périphérique pour des vitrages monolithiques trempés ou des feuilletés pas plus épais que 4 ou 5 mm ( ces gammes d'épaisseurs standard étant utilisées pour les vitrages sans "système actif" au sens de l'invention, et généralement monoverre).

Le vitrage selon l'invention, même dans sa configuration à trois verres, est apte à être monté sans problème comme un toit-automobile standard dans une carrosserie de voiture, grâce à ce dimensionnement particulier du troisième verre. Même dans le cas où S3 est un substrat formé d'un ou plusieurs films polymères superposés (comme le film PET/PVB mentionné en préambule), leur épaisseur n'est pas négligeable. En outre, le fait que S3 soit en matériau plastique et non en verre peut poser des problèmes de montage/d'étanchéification périphérique par rapport à des vitrages feuilletés standards à deux verres. Dans ce cas encore, le fait que S3 soit plus petit permet, le cas échéant, de conserver le montage/la façon de disposer le joint périphérique habituel des verres feuilletés.

L'invention est donc très souple dans sa mise en oeuvre, en fonction de l'application envisagée, des produits standards dont elle doit ou non se rapprocher en termes d'épaisseur ou de type de matériau/étanchéification ou fixation périphérique.

Le système actif selon l'invention peut être de type électrocommandable, à propriétés optiques et/ou énergétiques variables du type système électrochrome, valve optique, système viologène, système à cristaux liquides, système électroluminescent. Des détails à leur sujet ont été donnés en préambule de la présente demande.

Le système actif selon l'invention peut aussi être dépourvu d'alimentation électrique, en étant par exemple à fonction thermique (bas-émissif, anti-solaire), fonction acoustique (affaiblissement acoustique), à fonction optique (décorative, absorbante, etc.). Il peut aussi s'agir de revêtements thermochromes ou thermotropes, comme cela a été mentionné en préambule de la présente demande (à noter que les couches thermochromes peuvent aussi être éventuellement alimentées en courant, afin que par effet Joule elles puissent être chauffées volontairement et changer de propriétés optiques/thermiques à volonté, et pas seulement au gré de l'ensoleillement ambiant).

Selon une variante de l'invention, les substrats S1 et S2 sont en verre. Le substrat S3, quant à lui, peut être aussi en verre ou en matériau à base de polymère. Ce matériau polymère peut être sous forme d'un substrat relativement rigide, du type polycarbonate PC ou polyméthacrylate de méthyle PMMA. C'est alors un matériau se substituant au verre, par exemple si on cherche à alléger le vitrage dans son ensemble. Ce matériau peut aussi être semi-rigide ou flexible, et il peut constituer le film apte à retenir les éclats en cas de bris, comme mentionné plus haut.

Selon une variante de l'invention, le vitrage selon l'invention comprend au moins une feuille de polymère thermoplastique à fonction de rétention des éclats en cas de bris du vitrage, disposés entre les substrats S1 et S2 et/ou entre les substrats S2 et S3 (ce dernier cas de figure, quand S3 est un substrat rigide). S'il y a plusieurs feuilles (ou superposition de feuilles) de polymère thermoplastiques, c'est donc celle qui n'est pas en contact avec le système actif du type électrochrome qui jouera le rôle de sécurité essentiel.

Selon un exemple préféré de l'invention, les trois substrats S1, S2 et S3 sont en verre et feuilletés les uns aux autres par des feuilles de polymère thermoplastique.

Si on renumérote les faces des verres de l'extérieur vers l'intérieur (en considérant le vitrage une fois monté dans l'automobile ou dans le bâtiment), on peut donc, par exemple, avoir un système actif du type électrochrome en faces 3, 4 ou 5 des verres S1, S2 ou S3 selon les cas, et c'est la feuille intercalaire thermoplastique avec laquelle il n'est pas en contact qui confère la sécurité au vitrage.

En revenant à la configuration précédente où le substrat S3 est un film ou une superposition de films de polymère, il peut adhérer au substrat S2 sur une face munie ou non d'un système actif selon l'invention, directement ou par l'intermédiaire d'un adhésif.

Le système actif A peut se trouver sur la face extérieure 3 ou intérieure 4 du substrat S2 ou sur la face extérieure 5 du substrat S3, avec la numérotation des faces utilisant la convention mentionnée plus haut.

Avantageusement, l'épaisseur totale (e1 + e2) des substrats S1 et S2 et de tous les autres matériaux susceptibles d'être disposés entre eux (feuilles thermoplastiques, feuille élastomère, système actif, ...) est inférieure ou égale à 8 mm, notamment intérieure ou égale à 5.5 mm, de préférence comprise entre 2 mm et 5 mm. Ces épaisseurs accommodent la plupart des exigences si le vitrage est destiné à équiper un véhicule du type voiture, ou s'il s'agit de vitrages pour le bâtiment du type vitrage de toiture.

De préférence, les substrats S1 et S2 sont de dimensions substantiellement identiques, et S3 est de dimensions inférieures : il est positionné par rapport au substrat S2 de façon à délimiter une gorge périphérique ouverte de profondeur p d'au moins 5 mm, notamment d'au moins 8 mm, de préférence comprise entre 10 et 25 mm. Avantageusement, cette gorge est de profondeur constante sur tout le périmètre des substrats S2 et S3 qui la délimitent : on positionne ainsi de préférence S3 de façon centrée par rapport à S2, S3 étant de contour identique à 52, mais en proportions plus réduites.

En ce qui concerne les dimensions du système actif A, sa surface active est de préférence de dimensions similaires ou inférieures à celles du troisième substrat S3. On entend par « surface active » la surface qui présente effectivement la fonctionnalité voulue, excluant notamment les zones périphériques inactives utilisées pour la connectique. Si le système actif se trouve sur l'une des faces du substrat S3, ce dimensionnement est obligatoire. S'il se trouve plutôt sur une face du substrat S1 ou S2, ce dimensionnement permet de mieux adapter le système actif à la zone centrale du vitrage qui va être effectivement exposée à la vue, et non la zone périphérique des substrats S1 et S2 qui « déborde » par rapport au substrat S3 et qui, pour des raisons esthétiques, sera donc généralement masquée.

Selon une variante avantageuse de l'invention, on prévoit de munir effectivement le vitrage d'un revêtement périphérique opacifiant, du type sérigraphié, notamment à la périphérie de la face 2 intérieure du substrat S1 et/ou à la périphérie de la face 3 extérieure ou 4 intérieure du substrat S3, toujours avec les mêmes conventions. Il peut s'agir de revêtements à base d'émail, bien connus par ailleurs pour les vitrages automobiles : ces revêtements peuvent avoir plusieurs fonctions : cacher la connectique du système actif électrocommandable, cacher la zone périphérique du vitrage où le substrat S3 est absent, cacher une fonction non transparente (système électroluminescent), avoir une fonction décorative ....

La gorge périphérique semi-ouverte mentionnée plus haut et créée dans le vitrage du fait du retrait du substrat S3 peut être utilisée de différentes manières, et être exploitée de manière très avantageuse. Bien sûr, elle va permettre de fixer le vitrage à son bâti par fixation des substrats S1 et S2 uniquement. Mais cet espace libéré peut aussi permettre d'y faire cheminer, par exemple, des éléments de connectique du système actif quand celui-ci est électrocommandable.

La configuration particulière du vitrage selon l'invention permet différents positionnements des joints périphériques s'ils sont nécessaires. C'est notamment le cas où le vitrage contient des systèmes actifs (très) sensibles à l'humidité, au contact avec l'atmosphère ambiante en général. Le positionnement du joint est alors conditionné par celui du système actif, le but étant qu'il parvienne à l'étanchéifier correctement. Ainsi, si le système actif se trouve entre le substrat S2 et le substrat S3, au moins un joint sera utile à la périphérie de S2 et S3, mais pas nécessairement entre S1 et S2. On peut prévoir plusieurs joints complémentaires dans leur fonction (l'un barrière à l'eau vapeur, l'autre à l'eau liquide par exemple). Au moins un joint est de préférence prévu sur le chant du substrat S1 et/ou du substrat S2, et/ou celui du substrat S3 (notamment entre S2 et S3 comme vu plus haut si le système actif est entre le substrat S2 et S3: soit uniquement sur les chants des deux substrats et entre ceux-ci, soit débordants sur la face des deux substrats (ou de l'un d'entre eux). Il s'agit de préférence de la face qui est opposée à celle tournée vers le système actif .

Différentes techniques peuvent être utilisées pour faire ce ou ces joints périphériques. On peut les rapporter, en utilisant des joints préfabriqués sous forme de cordon (que l'on pose en les ramollissant, par un léger chauffage par exemple, de façon à ce qu'ils puissent créer l'étanchéité recherchée sur les chants des substrats considérés). On peut aussi les extruder, la technique d'extrusion de joints étant déjà utilisée notamment pour faire des joints de parebrise, comme cela est décrit dans les brevets EP 479 677 et EP 524 060.

On peut aussi les faire par une technique d'encapsulation. Il s'agit généralement d'une technique désignée sous le terme anglais de RIM (Reactive Injection Moulding), où l'on injecte dans un moule fermé épousant le conteur du vitrage (substrats S1, S2 et éventuellement S3 pour le vitrage de l'invention) un polymère qui est généralement en polyuréthane, à basse pression et à température peu élevée. Cette technique est notamment décrite dans le brevet FR00/012398 déposé le 29 septembre 2000.

Avantageusement, le joint périphérique utilisé (ou au moins l'un d'entre eux) est affleurant à la face 1 extérieure du premier substrat S1. Ce type de montage appelé « flush » en anglais est particulièrement esthétique, car il offre une continuité de surface avec la carrosserie, le bâti entourant le vitrage. Le (ou les) joint(s) périphérique(s) peut avantageusement remplir au moins en partie la gorge périphérique semi-ouverte décrite plus haut. Il peut aussi être traversé par des éléments de connectique du système actif A s'il est électrocommandable. Il peut aussi contenir des éléments de renfort mécanique (plots, billes, cadre ...), comme cela est notamment décrit dans le brevet FR 00/13307 déposé le 18 octobre 2000 et concernant des joints.

L'invention a pour objet, plus particulièrement, le mode de réalisation où le vitrage est un vitrage triple, avec trois verres S1, S2, S3 et double feuilletage, muni d'un système électrochrome tout-solide disposé de préférence sur la face extérieure 3 du second substrat S2 : c'est alors la feuille thermoplastique entre les substrats S2 et S3 qui assume principalement la fonction de sécurité (rétention d'éclats en cas de bris).

L'invention a pour objet toutes les applications des vitrages décrits précédemment, notamment pour le bâtiment comme vitrage de toiture ou pour l'industrie automobile en tant que toit-automobile (ouvrant ou non).

L'invention a aussi pour objet le véhicule automobile ainsi équipé, avec de préférence le(s) vitrage(s) selon l'invention affleurant à la carrosserie.

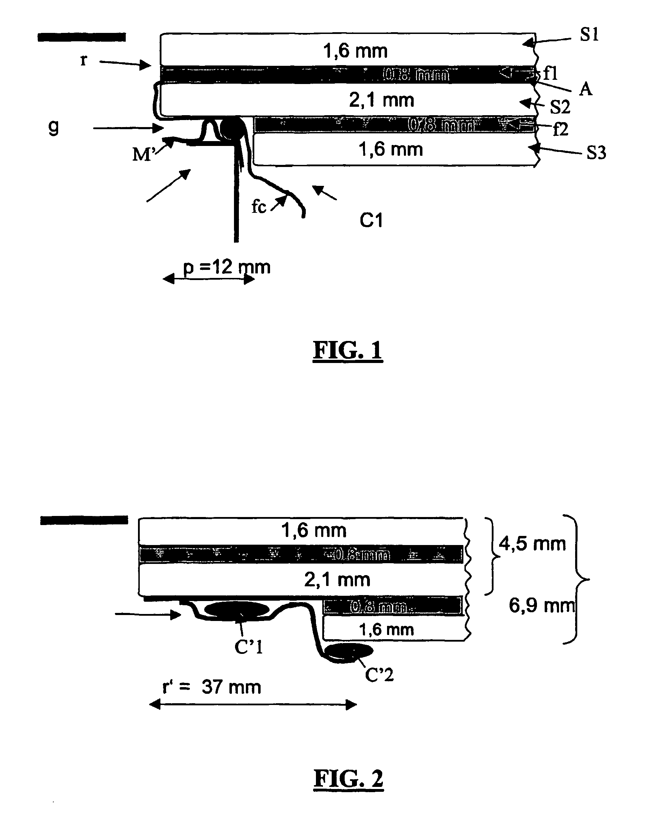

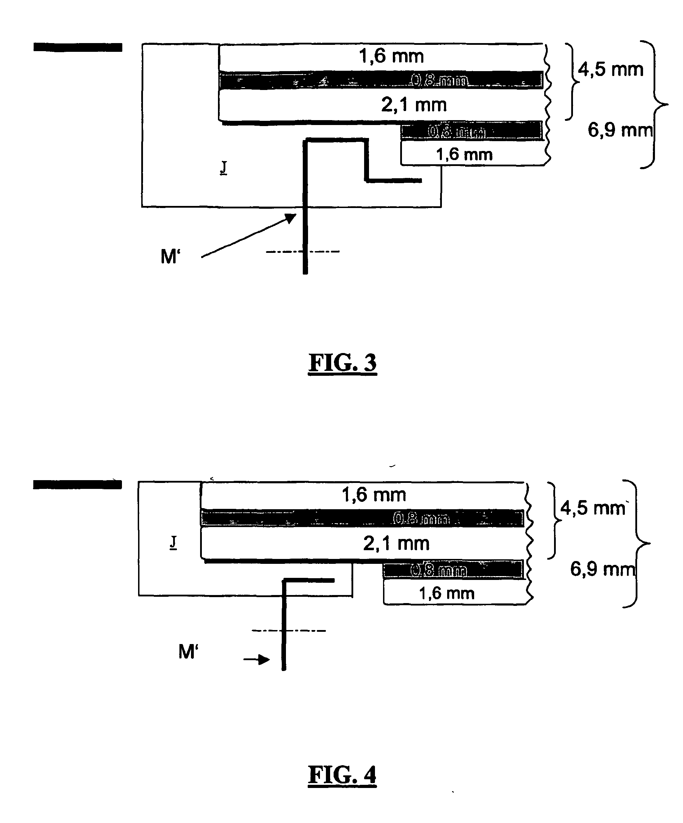

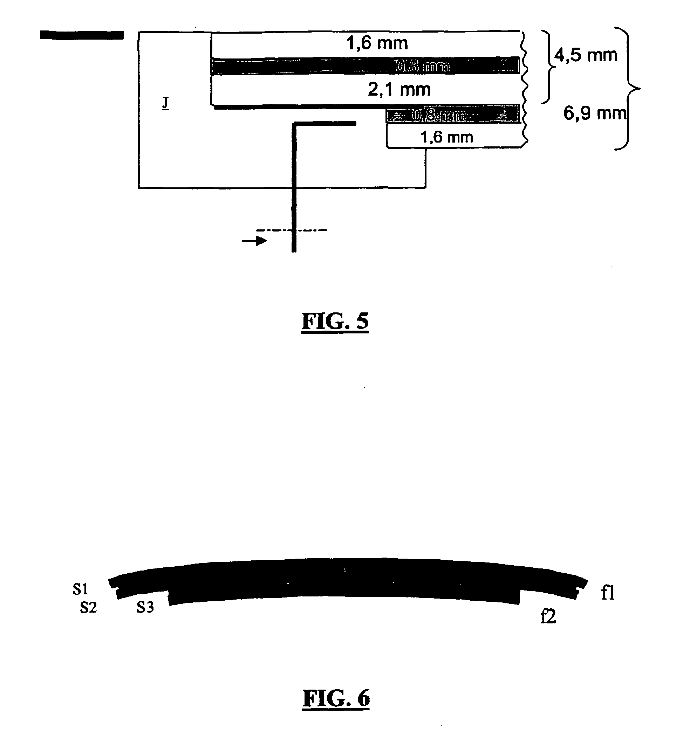

L'invention sera maintenant décrite en détails à l'aide d'exemples non limitatifs illustrés par les figures suivantes :
■ **figures 1 à 5** : une partie d'un vitrage selon l'invention vu en coupe, selon cinq variantes différentes.
■ **figure 6** **:** un vitrage selon l'invention en coupe, vu entièrement
   Les figures sont volontairement très schématiques et ne sont pas nécessairement à l'échelle, pour faciliter leur lecture.

### EXEMPLES 1 à 5 :

Les exemples 1 à 5 suivants, illustrés respectivement par les figures 1 à 5, concernent tous un vitrage de toit auto. Il comprend successivement, de l'extérieur vers l'intérieur de l'habitacle, trois verres S1, S2, S3, qui sont des verres clairs (ils peuvent aussi être teintés) silico-sodo-calciques de respectivement 1,6 ; 2,1 et 1,6 mm d'épaisseur.

La figure 6 représente le vitrage selon l'invention dans sa caractéristique la plus importante : le verres S3 est plus petit que les deux autres verres S1 et S2 et en retrait par rapport à eux.

Les verres S1 et S2 sont de même taille et de forme rectangulaire. Leurs dimensions sont 900 x 500 mm².

Le verre S1 peut comporter en face 2 un empilement de couches minces à fonction anti-solaire.

Le verre S3 est plus petit que les deux autres, positionné de façon centré par rapport à S2 et de dimensions 875 x 475 mm².

Cette configuration laisse une gorge périphérique ouverte g de profondeur p variable selon les exemples.

Le verre S1 est feuilleté au verre S2 par une feuille f1 thermoplastique en polyuréthane (PU) de 0,8 mm d'épaisseur (elle peut être remplacée par une feuille d' étylènevinylacétate (EVA)ou de polyvinylbutyral PVB).

Sur la face 3 du vitrage, c'est-à-dire la face la plus extérieure du verre S2, est disposé un système actif A. il s'agit d'un système électrochrome tout solide, composé de l'empilement de couches suivantes (en partant de la face 3 du verre S2 ):
➲ une couche conductrice inférieure 2, qui est un bicouche constitué d'une première couche de SiOₓN_{y} de 30 nm surmontée d'une seconde d'ITO (oxyde d'indium dopé à l'étain) de 250 nm,
➲ une première couche de matériau électrochrome anodique en oxyde d'iridium (hydraté) de 40 à 100 nm ou d'oxyde de nickel hydraté de 40 nm à 400 nm, alliée ou non à d'autres métaux,
➲ une couche en oxyde de tungstène de 100 nm,
➲ une seconde couche en oxyde de tantale hydraté ou d'oxyde de silice hydraté ou d'oxyde de zirconium hydraté de 100 nm,
➲ une seconde couche de matériau électrochrome cathodique à base d'oxyde de tungstène WO₃ de 370 nm,
➲ une couche conductrice supérieure d'ITO de 100 à 300 nm.

Toutes ces couches sont déposées de façon connue par pulvérisation cathodique réactive assistée par champ magnétique.

On ne détaille pas la connectique, tous les moyens utilisés pour alimenter en électricité les deux couches électroconductrices. Elle est conventionnelle et décrite dans les brevets cités en préambule.

Elle peut notamment comprendre un réseau de fils conducteurs en contact avec l'électrode supérieure, comme cela est décrit dans le brevet PCT/FR00/00675.

Le verre S2 et le verre S3 sont feuilletés par une feuille f2 thermoplastique en PU ou EVA ou PVB de 0,38 à 0,76 mm d'épaisseur.

La présence du système électrochrome A en face 3 fragilise l'interface entre le verre S2 et la feuille thermoplastique f1, ce qui ne garantit plus suffisamment la rétention d'éclats par la feuille f1 en cas de bris : selon l'invention, la feuille thermoplastique f2 va prendre le relais de la feuille f1 dans cette fonction de sécurité. Réciproquement, si le système actif se trouve en face 4 ou 5, c'est de nouveau la feuille f1 qui assumera de façon prépondérante cette fonction.

On peut ainsi avoir une configuration alternative, où l'on a un vitrage feuilleté standard (S1 + f1 + S2) assurant la fonction de sécurité, que l'on vient fonctionnaliser en lui adjoignant par feuilletage avec la feuille f2 un verre S3 muni d'un système actif A.

Bien sûr, comme évoqué plus haut dans le présent texte, on peut associer le système actif A à son contre-substrat (par rapport à son substrat porteur, celui sur lequel on l'a déposé) non pas par feuilletage, mais par association avec une feuille polymère du type élastomère, par un adhésif simple ou double face, ....

### Exemple 1

La figure 1 présente une coupe en portion du vitrage à trois verres décrit plus haut, en position en tant que toit-automobile par rapport à son système de fixation dans la carrosserie. On voit que la gorge g a une profondeur p de 12 mm, et que la face 2 intérieure du substrat S1 est munie sur sa périphérie d'un revêtement opacifiant sérigraphié r sur une largeur approximativement égale à la profondeur p de la gorge g. Le système actif A (sa surface active) a des dimensions légèrement inférieures à celles du substrat S3.

La figure représente le cadre métallique M sur lequel doit être fixé le toit automobile, avec des renforts sous forme d'inserts métalliques M' que l'on vient coller au vitrage par l'intermédiaire d'un cordon de colle C1. On voit cheminer le long du chant du verre S2 des fils conducteurs fc qui font partie de la connectique du système électrochrome A, et qui traversent ensuite la gorge g : il s'est avéré très pratique d'exploiter ainsi cette gorge pour faire passer ces fils conducteurs de l'extérieur vers l'intérieur du vitrage (et de l'habitacle).

### Exemple 2

Il se réfère à la figure 2. Par rapport à la figure 1, on voit que le retrait du verre S3 est plus important : ici, la gorge a une profondeur p de 37 mm. Il y a un revêtement sérigraphié r' en plus sur la face 2 du verre S1 qui est également plus large que le revêtement r selon l'exemple 1, et qui est d'environ 37 mm, comme la profondeur de la gorge.

La liaison mécanique avec le cadre est maintenant assurée en face 6 du verre S3 également, avec des renforts métalliques M' fixés en faces 4 et 6 à l'aide de deux cordons de colle C'1 et C'2.

### Exemple 3

On retrouve la configuration de l'exemple 2 quant au retrait de 37 mm du verre S3. Ici, on a utilisé un joint J encapsulé, affleurant en face 1 du verre S1, à base de PU et venant noyer la gorge g (et de fait toute la connectique qui y chemine).

Ce joint contient aussi les renforts métalliques M' et vient déborder sur la face intérieure 6 du verre S3 sur une épaisseur d'environ 2 mm. La forme des renforts a été adaptée pour qu'ils soient plus efficaces et qu'ils associent le verre S3 à la liaison mécanique du vitrage au cadre métallique.

### Exemple 4

On retrouve la configuration des exemples 2 et 3. Le joint J est encapsulé comme à l'exemple 3, mais il n'est ici pas en contact avec le verre S3, ni sur une de ses faces ni sur son chant. Ici, le joint ne remplit pas toute la gorge.

### Exemple 5

On retrouve la configuration de l'exemple 3, mais avec cette fois des renforts métalliques M' plus standards.

En conclusion, l'invention a mis au point un vitrage où l'on peut obtenir 100% de la qualité escomptée du système actif qu'il contient et 100% de la fonction de sécurité exigée notamment dans l'industrie automobile, avec un encombrement réduit. Si on reprend les exemples, on voit en effet que l'on peut fixer le vitrage à la carrosserie sur les verres S1 et S2, soit sur une épaisseur globale de 4,5 mm.

Beaucoup d'autres variantes sont possibles : on peut notamment substituer à la feuille thermoplastique f2 et au verre S3 un substrat S'3 uniquement à base de feuilles de polymère, pouvant au besoin assurer la fonction de sécurité requise. Dans ce cas, même si le substrat S3 peut alors être relativement mince (davantage qu'un verre), il reste intéressant de le prévoir en retrait par rapport aux verres S1 et S2 pour deux raisons alternatives ou cumulatives :
➲ d'une part, son épaisseur peut ne pas être négligeable (1 mm par exemple),
➲ d'autre part, s'il est en matériau plastique alors que les deux autres substrats sont en verre, il peut être intéressant de pouvoir continuer à utiliser:
   - des joints qui sont connus pour bien adhérer au verre pour les verres S1, S2 et les matériaux disposés entre ces deux verres, en laissant « à part » le substrat S3 en plastique dont l'adhérence audit joint peut être jugée insuffisante (ou dont la technique de dépôt de joint est plus adaptée à des verres qu'à des substrats plastiques fins)
   - des matériaux de primage et d'encapsulation qui sont davantage adaptés, de la même manière, au verre.

Au titres de ces variantes, on peut envisager un vitrage incorporant soit entre les substrats (S1 et 52) ou entre les substrats (S2 et S3) un système actif électroluminescent de type organique communément appelé système OLEDs pour « Organic Light Emitting Diode », ou PLEDs pour « polymer Light Emitting Diode » ou de type inorganique et dans ce cas communément appelé système TFEL pour « Thin Film Electroluminescent ».

Le vitrage peut aussi être constitué par l'assemblage d'un substrat S3 en verre ou en polymère qui est rapporté par collage sur un vitrage traditionnel constitué de deux substrats (S1+S2), le substrat S3 étant de plus petites dimensions que S1+S2 et en retrait de ces derniers et pouvant comporter une fonctionnalité qui ne nuit pas avec la fonction de rétention des éclats (par exemple une fonctionnalité décorative ou bas émissive ou autre). Un système actif de type électrochrome est inséré, lors de la fabrication du vitrage précédent, entre S3 d'une part, et S1+S2 d'autre part.

En tant que variante à l'exemple précédent, le substrat S2 est un substrat polymère à fonction bas émissive et éventuellement complété par une fonctionnalité de transparence aux ondes électromagnétiques, S1 est un contre-verre, S3 est toujours en retrait de S1+S2 et un système actif de type électrochrome est inséré entre S3 et S1+S2.

## Revendications

1. Vitrage pour l'industrie automobile ou pour le bâtiment, comportant successivement :
- un premier substrat rigide (S1),
- un second substrat rigide (52),
- un troisième substrat rigide, semi-rigide ou flexible (S3),
- le troisième substrat (S3) étant en retrait par rapport aux deux autres substrats (S1 et S2),
- au moins un film polymère a fonction de rétention des éclats en cas de bris du vitrage étant disposé entre le substrat (S1) et le substrat (52) et/ou entre le substrat (52) et le substrat (S3) et/ou faisant partie du substrat (S3), **caractérisé en ce qu'**au moins un système actif (A) comprenant au moins une couche est disposé entre les substrats (S1 et S2) ou entre les substrats (52 et S3), et **en ce que** la surface active du système actif (A) est de dimensions similaires ou inférieures à celles du troisième substrat (S3).

2. Vitrage selon la revendication 1, ***caractérisé en ce que*** le système actif est un système électrocommandable, à propriétés optiques et/ou énergétiques variables du type système électrochrome, valve optique, système viologène, système à cristaux liquides, système électroluminescent.

3. Vitrage selon la revendication 1, ***caractérisé en ce que*** le système actif est une couche mince ou un empilement de couches minces à fonction thermique, du type bas-émissif ou anti-solaire, à fonction acoustique, du type revêtement d'affaiblissement acoustique, à fonction optique du type décoratif ou absorbant, thermochrome, ou thermotrope.

4. Vitrage selon l'une des revendications précédentes, ***caractérisé en ce que*** les substrats (S1) et (S2) sont en verre et **en ce que** le substrat (53) est soit en verre, soit en matériau à base de polymère(s).

5. Vitrage selon l'une des revendications précédentes, ***caractérisé en ce qu'****il* comprend au moins une feuille de polymère thermoplastique(f1, f2), à fonction de rétention des éclats en cas de bris du vitrage, entre les substrats (S1) et (52) et/ou entre les substrats (52) et (S3).

6. Vitrage selon l'une des revendications précédentes, ***caractérisé en ce que*** les trois substrats (S1), (52), (53) sont en verre et feuilletés les uns aux autres par des feuilles de polymère thermoplastique (f1, f2).

7. Vitrage selon l'une des revendications 1 à 5, ***caractérisé en ce que*** les substrats (S1) et (S2) sont en verre, *et **en ce que*** le substrat (53) est un film polymère ou une association de films polymère à fonction de rétention d'éclats.

8. Vitrage selon l'une des revendications 1 à 5 ou 7, ***caractérisé en ce que*** le substrat (S3) est un film polymère ou une association de films polymère adhérant au substrat (2) sur sa face munie ou non du système fonctionnel, directement ou par l'intermédiaire d'un adhésif.

9. Vitrage selon l'une des revendications précédentes, ***caractérisé en ce que*** le système actif (A) se trouve sur la face extérieure (3) ou intérieure (4) du substrat (S2) ou sur la face extérieure (5) du substrat (S3).

10. Vitrage selon l'une des revendications précédentes, ***caractérisé en ce que*** l'épaisseur totale (e₁₊₂) des substrats (S1) et (52) et de tous les autres matériaux susceptibles d'être disposés entre eux est inférieure ou égale à 8 mm, notamment inférieure ou égale à 5,5 mm, de préférence comprise entre 2 mm et 5 mm.

11. Vitrage selon l'une des revendications précédentes, ***caractérisé en ce que*** les substrats (S1) et (S2) sont de dimensions substantiellement identiques *et **en ce que*** le substrat (53) est de dimensions inférieures et positionné par rapport au substrat (S2) de façon à délimiter une gorge périphérique ouverte de profondeur (p) d'au moins 5 mm, notamment d'au moins 8 mm, de préférence comprise entre 10 et 25 mm.

12. Vitrage selon la revendication 11, ***caractérisé en ce que*** la profondeur (p) de la gorge est constante sur tout le périmètre des substrats (S2) et (S3) qui la délimitent.

13. Vitrage selon l'une des revendications précédentes, ***caractérisé en ce qu'****il* est muni d'un revêtement périphérique opacifiant, du type sérigraphié, notamment à la périphérie de la face (2) intérieure du substrat (S1) et/ou à la périphérie de la face (3) extérieure ou (4) intérieure du substrat (S2).

14. Vitrage selon l'une des revendications précédentes, ***caractérisé en ce que*** le retrait du substrat (53) par rapport aux deux autres substrats (S1), (S2) délimite une gorge périphérique ouverte dans laquelle cheminent des éléments de connectique du système actif (A) dans le cas où celui-ci est électrocommandable.

15. Vitrage selon l'une des revendications précédentes, ***caractérisé en ce qu'****il* est muni d'au moins un joint périphériques (J) en contact avec au moins le chant du substrat (S1) et/ou (S2) et/ou celui du substrat (S3).

16. Vitrage selon la revendication 15, ***caractérisé en ce que*** le(s) joint(s) périphérique(s) (J) est (sont) rapporté(s) ou obtenu(s) par extrusion ou obtenu(s) par encapsulation.

17. Vitrage selon la revendication 15 ou la revendication 16, ***caractérisé en ce que*** le joint périphérique (J), ou au moins l'un d'entre eux s'il y en a plusieurs, est affleurant à la face extérieure (1) du premier substrat (S1).

18. Vitrage selon l'une des revendications 15 à 17, ***caractérisé en ce que*** le joint périphérique (J) ou au moins l'un d'entre eux s'il y en a plusieurs, remplit au moins partiellement la gorge périphérique ouverte délimitée par le retrait du substrat (53) part rapport aux deux autres substrats (S1), (S2).

19. Vitrage selon la revendication 18, ***caractérisé en ce que*** le joint périphérique (J) est traversé par des éléments de connectique du système actif (A) et/ou contient au moins en partie des éléments de renfort mécanique.

20. Vitrage selon l'une des revendications précédentes, ***caractérisé en ce qu'****il* s'agit d'un vitrage triple, avec trois verres (S1), (S2), (S3) et double feuilletage (f1,f2), muni d'un système électrochrome tout solide (A) disposé sur la face extérieure (3) du second substrat (S2).

21. Vitrage selon l'une des revendications précédentes, ***caractérisé en ce qu'****il* passe le tests de sécurité des normes ECE R43 et ANSI Z26.1.

22. Véhicule automobile, ***caractérisé en ce qu'**il* est équipé du vitrage selon l'une des revendications précédentes, en tant que toit-automobile ou non, de préférence affleurant à la carrosserie.

## Claims

1. Glazing unit for the automotive industry or a building, successively comprising:
- a first rigid substrate (S1),
- a second rigid substrate (S2),
- a third rigid, semi-rigid or flexible substrate (S3),
- the third substrate (S3) being set back with respect to the other two substrates (S1 and S2),
- at least one polymer film having the function of retaining splinters in the event of breakage of the glazing unit being placed between the substrate (S1) and the substrate (S2) and/or between the substrate (S2) and the substrate (S3) and/or forming part of the substrate (S3), **characterized in that** at least one active system (A) comprising at least one layer is placed between the substrates (S1 and S2) or between the substrates (S2 and S3), and **in that** the active surface of the active system (A) has dimensions similar to or smaller than those of the third substrate (S3).

2. Glazing unit according to Claim 1, ***characterized in that*** the active system is an electrically controllable system, with variable energy and/or optical properties of the electrochromic system, optical valve, viologen system, liquid crystal system, electroluminescent system type.

3. Glazing unit according to Claim 1, ***characterized in that*** the active system is a thin layer or a stack of thin layers having a thermal function of the low-emissivity or solar-protection type, having an acoustic function, of the acoustic attenuation coating type, having an optical function of the decorative or absorbent, thermochromic or thermotropic type.

4. Glazing unit according to one of the preceding claims, ***characterized in that*** the substrates (S1) and (S2) are made of glass and **in that** the substrate (S3) is either made of glass or of a polymer-based material.

5. Glazing unit according to one of the preceding claims, ***characterized in that*** it comprises at least one thermoplastic polymer sheet (f1, f2), having the function of retaining splinters in the event of breakage of the glazing unit, between the substrates (S1) and (S2) and/or between the substrates (S2) and (S3).

6. Glazing unit according to one of the preceding claims, ***characterized in* *that*** the three substrates (S1), (S2), (S3) are made of glass and laminated to each other by thermoplastic polymer sheets (f1, f2).

7. Glazing unit according to one of Claims 1 to 5, ***characterized in that*** the substrates (S1) and (S2) are made of glass, ***and in that*** the substrate (S3) is a polymer film or a combination of polymer films having the function of retaining splinters.

8. Glazing unit according to one of Claims 1 to 5 or 7, ***characterized in that*** the substrate (S3) is a polymer film or a combination of polymer films adhering to the substrate (2) on its face that may or may not be equipped with the functional system, directly or via an adhesive.

9. Glazing unit according to one of the preceding claims, ***characterized in that*** the active system (A) is on the outer (3) or inner (4) face of the substrate (S2) or on the outer face (5) of the substrate (S3).

10. Glazing unit according to one of the preceding claims, ***characterized in that*** the total thickness (e₁₊₂) of the substrates (S1) and (S2) and of all the other materials likely to be placed between them is less than or equal to 8 mm, especially less than or equal to 5.5 mm, preferably between 2 mm and 5 mm.

11. Glazing unit according to one of the preceding claims, ***characterized in that*** the substrates (S1) and (S2) are of substantially identical dimensions *and **in that*** the substrate (S3) is of smaller dimensions and positioned with respect to the substrate (S2) so as to delimit an open peripheral groove having a depth (p) of at least 5 mm, especially at least 8 mm, preferably between 10 and 25 mm.

12. Glazing unit according to Claim 11, ***characterized in that*** the depth (p) of the groove is constant over the entire perimeter of the substrates (S2) and (S3) which delimit it.

13. Glazing unit according to one of the preceding claims, ***characterized in that*** it is equipped with an opacifying peripheral coating, of the screen-printing type, especially on the periphery of the inner face (2) of the substrate (S1) and/or on the periphery of the outer (3) or inner (4) face of the substrate (S2).

14. Glazing unit according to one of the preceding claims, ***characterized in that*** the setting back of the substrate (S3) from the other two substrates (S1), (S2) delimits an open peripheral groove in which connector elements of the active system (A) run, where the active system can be electrically controlled.

15. Glazing unit according to one of the preceding claims, ***characterized in that*** it is equipped with at least one peripheral seal (J) in contact with at least the side of the substrate (S1) and/or (S2) and/or that of the substrate (S3).

16. Glazing unit according to Claim 15, ***characterized in that*** the peripheral seal(s) (J) is (are) brought about or obtained by extrusion or obtained by encapsulation.

17. Glazing unit according to Claim 15 or Claim 16, ***characterized in that*** the peripheral seal (J), or at least one of them if there are several thereof, is flush with the outer face (1) of the first substrate (S1).

18. Glazing unit according to one of Claims 15 to 17, ***characterized in that*** the peripheral seal (J) or at least one of them if there are several thereof, at least partially fills the open peripheral groove delimited by the setting back of the substrate (S3) from the other two substrates (S1), (S2).

19. Glazing unit according to Claim 18, ***characterized in that*** the peripheral seal (J) is traversed by connection elements of the active system (A) and/or contains at least in part, mechanical strengthening elements.

20. Glazing unit according to one of the preceding claims, ***characterized in that*** it is a triple glazing unit, with three panes (S1), (S2), (S3) and double lamination (f1, f2), equipped with an all-solid electrochromic system (A) placed on the outer face (3) of the second substrate (S2).

21. Glazing unit according to one of the preceding claims, ***characterized in that*** it passes the safety tests of the ECE R43 and ANSI Z26.1 standards.

22. Motor vehicle, ***characterized in that*** it is equipped with glazing unit according to one of the preceding claims, whether or not as a sunroof, and preferably flush with the bodywork.

## Patentansprüche

1. Glas für die Automobilindustrie oder das Bauwesen, das übereinander:
- ein erstes starres Substrat (S1),
- ein zweites starres Substrat (S2) und
- ein starres, halbstarres oder flexibles drittes Substrat (S3) umfasst, wobei
- das dritte Substrat (S3) in Bezug auf die zwei anderen Substrate (S1 und S2) zurückgesetzt ist und
- mindestens eine Polymerfolie mit der Funktion des Festhaltens der Glassplitter beim Zu-Bruch-Gehen des Glases zwischen dem Substrat (S1) und dem Substrat (S2) und/oder zwischen dem Substrat (S2) und dem Substrat (S3) angeordnet ist und/oder Bestandteil des Substrats (S3) ist,
**dadurch gekennzeichnet, dass** mindestens ein aktives System (A) wenigstens eine Schicht umfasst und zwischen den Substraten (S1 und S2) oder zwischen den Substraten (S2 und S3) angeordnet ist, und dass die aktive Oberfläche des aktiven Systems (A) ähnliche oder kleinere Abmessungen wie diejenigen des dritten Substrats (S3) hat.

2. Glas nach Anspruch 1, **dadurch gekennzeichnet, dass** das aktive System ein elektrisch regelbares System mit veränderlichen optischen und/oder energetischen Eigenschaften vom Typ elektrochromes System, optisches Ventil, viologenes System, Flüssigkristallsystem und elektrolumineszentes System ist.

3. Glas nach Anspruch 1, **dadurch gekennzeichnet, dass** das aktive System eine dünne Schicht oder ein Aufbau aus dünnen Schichten mit thermischer Funktion vom Typ niedrig emittierend oder vor Sonne schützend, mit akustischer Funktion vom Typ einer schalldämpfenden Beschichtung und mit optischer Funktion vom dekorativen oder absorbierenden, thermochromen oder thermotropen Typ ist.

4. Glas nach einem der vorhergehenden Ansprüche, **dadurch gekennzeichnet, dass** die Substrate (S1) und (S2) aus Glas bestehen, und dass das Substrat (S3) entweder aus Glas oder einem Material auf der Basis von einem oder mehreren Polymeren besteht.

5. Glas nach einem der vorhergehenden Ansprüche, **dadurch gekennzeichnet, dass** es mindestens eine Folie (f1, f2) aus einem thermoplastischen Polymer mit der Funktion des Festhaltens der Glassplitter beim Zu-Bruch-Gehen des Glases zwischen den Substraten (S1) und (S2) und/oder zwischen den Substraten (S2) und (S3) umfasst.

6. Glas nach einem der vorhergehenden Ansprüche, **dadurch gekennzeichnet, dass** die drei Substrate (S1), (S2) und (S3) aus Glas bestehen und durch Folien (f1, f2) aus einem thermoplastischen Polymer miteinander verbunden sind.

7. Glas nach einem der Ansprüche 1 bis 5, **dadurch gekennzeichnet, dass** die Substrate (S1) und (S2) aus Glas bestehen, **und dass** das Substrat (S3) eine Polymerfolie oder ein Polymerfolienverbund mit der Funktion des Festhaltens von Glassplittern ist.

8. Glas nach einem der Ansprüche 1 bis 5 oder 7, **dadurch gekennzeichnet, dass** das Substrat (S3) eine Polymerfolie oder ein Polymerfolienverbund ist, die/der an dem Substrat (S2) auf dessen gegebenenfalls mit dem funktionellen System versehener Seite direkt oder über einen Klebstoff anhaftet.

9. Glas nach einem der vorhergehenden Ansprüche, **dadurch gekennzeichnet, dass** sich das aktive System (A) auf der Außenseite (3) oder Innenseite (4) des Substrats (S2) oder auf der Außenseite (5) des Substrats (S3) befindet.

10. Glas nach einem der vorhergehenden Ansprüche, **dadurch gekennzeichnet, dass** die Gesamtdicke (e₁₊₂) der Substrate (S1) und (S2) und aller anderen Materialien, die zwischen ihnen angeordnet werden können, weniger als oder gleich 8 mm, insbesondere weniger als oder gleich 5,5 mm, und vorzugsweise 2 bis 5 mm beträgt.

11. Glas nach einem der vorhergehenden Ansprüche, **dadurch gekennzeichnet, dass** die Abmessungen der Substrate (S1) und (S2) im Wesentlichen gleich sind, und dass das Substrat (S3) kleinere Abmessungen hat und in Bezug auf das Substrat (S2) derart angeordnet ist, dass es eine offene Umfangsnut mit einer Tiefe (p) von mindestens 5 mm, insbesondere mindestens 8 mm, und vorzugsweise 10 bis 25 mm begrenzt.

12. Glas nach Anspruch 11, **dadurch gekennzeichnet, dass** die Tiefe (p) der Nut über den gesamten Umfang der Substrate (S2) und (S3), die sie begrenzen, konstant ist.

13. Glas nach einem der vorhergehenden Ansprüche, **dadurch gekennzeichnet, dass** es mit einer opak machenden Umfangsbeschichtung vom Typ Siebdruck, insbesondere am Umfang der Innenseite (2) des Substrats (S1) und/oder am Umfang der Außenseite (3) oder Innenseite (4) des Substrats (S2), versehen ist.

14. Glas nach einem der vorhergehenden Ansprüche, **dadurch gekennzeichnet, dass** der Rücksprung des Substrats (S3) in Bezug auf die zwei anderen Substrate (S1) und (S2) eine offene Umfangsnut begrenzt, in welcher Anschlusselemente des aktiven Systems (A) dann laufen, wenn dieses elektrisch regelbar ist.

15. Glas nach einem der vorhergehenden Ansprüche, **dadurch gekennzeichnet, dass** es mit mindestens einer Umfangsdichtung (J) im Kontakt mit mindestens der Kante des Substrats (S1) und/oder (S2) und/oder der des Substrats (S3) versehen ist.

16. Glas nach Anspruch 15, **dadurch gekennzeichnet, dass** die Umfangsdichtung/en (J) angesetzt oder durch Extrudieren oder Umkapseln erhalten ist/sind.

17. Glas nach Anspruch 15 oder 16, **dadurch gekennzeichnet, dass** die Umfangsdichtung (J) oder mindestens eine davon, wenn mehrere vorhanden sind, auf der Außenseite (1) des ersten Substrats (S1) bündig aufliegt.

18. Glas nach einem der Ansprüche 15 bis 17, **dadurch gekennzeichnet, dass** die Umfangsdichtung (J) oder mindestens eine davon, wenn mehrere vorhanden sind, die offene Umfangsnut wenigstens teilweise ausfüllt, die von dem Rücksprung des Substrats (S3) in Bezug auf die zwei anderen Substrate (S1) und (S2) begrenzt wird.

19. Glas nach Anspruch 18, **dadurch gekennzeichnet, dass** durch die Umfangsdichtung (J) Anschlusselemente des aktiven Systems (A) führen und/oder sie wenigstens teilweise mechanische Verstärkungselemente enthält.

20. Glas nach einem der vorhergehenden Ansprüche, **dadurch gekennzeichnet, dass** es sich um ein Dreifachglas mit drei Glasscheiben (S1), (S2) und (S3) und zwei Verbindungsfolien (f1, f2) handelt, das mit einem vollständig festen elektrochromen System (A) versehen ist, das auf der Außenseite (3) des zweiten Substrats (S2) angeordnet ist.

21. Glas nach einem der vorhergehenden Ansprüche, **dadurch gekennzeichnet, dass** es die Sicherheitsprüfungen der Normen ECE R43 und ANSI Z26.1 bestanden hat.

22. Kraftfahrzeug, **dadurch gekennzeichnet, dass** es mit einem Glas nach einem der vorhergehenden Ansprüche, gegebenenfalls als Autodach, und welches vorzugsweise mit der Karosserie bündig abschließt, ausgestattet ist.
